# EUROPÄISCHE PATENTANMELDUNG

(11) **EP 0 866 187 A1**
(43) Veröffentlichungstag der Anmeldung: **23.09.1998**
(21) Anmeldenummer: 98104837.4
(22) Anmeldetag: 17.03.1998
(51) Int. Cl.: E04B 1/344

(54) **Mobiles Gebäude**

(30) Priorität: 20.03.1997 DE 29705139 U
(71) Anmelder: Nagelschneider, Walter, 81927 München (DE)
(72) Erfinder: Nagelschneider, Walter, 81927 München (DE)
(74) Vertreter: Grünecker, Kinkeldey, Stockmair & Schwanhäusser Anwaltssozietät

(57) **Zusammenfassung**

Ein mobiles Gebäude (G), insbesondere für Ausstellungs-, Präsentations- oder Informationszwecke, besitzt für den den Straßentransport zulässige Transportabmessungen und ist am Gebrauchsort in Breite und Höhe auf ein Mehrfaches der Transportabmessungen betragende Gebrauchsabmessungen vergrößerbar und stationär einsetzbar, wobei das Gebäude als Transporteinheit (G_{T}) bordeigene, funktionell integrierte Vergrößerungskomponenten (K) und Antriebsvorrichtungen (A, D) für die Vergrößerungskomponenten aufweist, sowie ein selbsttragendes Basisskelett aus einem Bodenrahmen (4) und daran endseitig hochstehenden Portalrahmen (9), an denen mit wenigstens einer Hubvorrichtung (15) teleskopartig anhebbare, in Längsrichtung des Gebäudes durch wenigstens einen Längsträger (7, 7') miteinander gekoppelte Hilfsportalrahmen geführt sind, wobei an dem jeweiligen Längsträger (7) Schwenkausleger (6) angebracht sind, die um eine gemeinsame Längsachse des Gebäudes (G) hochschwenkbar sind.

## Beschreibung

Die Erfindung betrifft ein mobiles Gebäude der im Oberbegriff des Anspruchs 1 angegebenen Art.

Es sind in der Praxis im Straßenverkehr (ohne Sondergenehmigung) transportierbare mobile Gebäude bekannt, die am Gebrauchsort stationär als Messe-, Informations-, Imbißstand od. dgl. auf Messen, Jahrmärkten, bei Wahl- und Sportveranstaltungen oder für andere Zwecke, z.B. in militärischen Bereichen, für reihenuntersuchungen od. dgl., verwendet werden. Dies sind beispielsweise um- oder ausgebaute Lastwagen, Autobusse, Caravans oder Container mit standardisierten Abmessungen. Ein Nachteil dieser mobilen Gebäude liegt darin, daß durch die vorgesehenen Transportabmessungen und mit am Gebrauchsort ausziehbaren Schubladen oder abklappbaren Wandelementen der letztendlich nutzbare Raum sehr beschränkt ist oder unzugänglich ist, weil die Fahrzeug-Konzeption dominiert und beim stationären Gebrauch Einschränkungen bedingt. Im Falle eines mobilen Messe- oder Ausstellungsgebäudes bedeutet dies eine räumliche und optische Einschränkung hinsichtlich aufstellbarer Ausstellungsstücke oder Informationsmittel, des einzusetzenden Personals und der Anzahl gleichzeitig zu beherbergender Besucher. Auch ist die Attraktivität am Aufstellungsort unbefriedigend, weil der Fahrzeugcharakter optisch im Vordergrund bleibt. Deshalb sind derartige mobile Gebäude bisher nicht konkurrenzfähig mit vor Ort aus Einzelteilen gebauten Messe- oder Informationsständen, die für möglichst viele Besucher, eine anschauliche Präsentation von Objekten und Informationen, und außen wie innen attraktiv sind. Solche "Stände" sind in zerlegtem und verpacktem Zustand transportabel, erfordern jedoch zeitaufwendigen Auf- und Abbau durch Spezialisten. Es besteht ein erheblicher Bedarf an mobilen Gebäuden, die rasch und bequem auf- und abbaubar sind, und trotz der Mobilität ein Raumangebot und eine Attraktivität am Gebrauchsort gewährleisten, wie sie bisher bei mobilen Gebäuden nicht zu verwirklichen waren.

Aus GB 2 085 941 A ist ein für landwirtschaftliche Messen oder Ausstellungen konzipierter Unterstand bekannt, der sich in zusammengelegtem Zustand mit einem Zugfahrzeug transportieren läßt und am Einsatzort mit bordeigenen Mitteln vergrößert wird. Teleskopierbare Viereckrahmen an beiden Stirnenden einer Bodenplatte und ein einziger mittlerer, oberer Verbindungsträger fungieren sowohl in der Transporteinheit als auch im vergrößterten Gebäude als Träger eines Großteils der Komponenten des Gebäudes. Mit dieser Bauweise ist die Stabilität gering. Für die Dachkonstruktion sind horizontal ausschwenkbare Seitenträger vorgesehen, die endseitig abgestützt werden müssen, ehe einzelne Träger, die ein Planendach tragen, ausgefahren werden. Dieses Konstruktionsprinzip bedingt einen zeitaufwendigen schrittweisen Aufbau des vergrößerten Gebäudes mit Hilfsgeräten.

Bei einem aus EP-A-0 372 147 bekannten, transportablen Feldhospital sind eine Unterkonstruktion und eine Dachkonstruktion vertikal relativ zueinander mit integrierten Hubvorrichtungen teleskopierbar, und sind zwischen diesen beiden Komponentengruppen seitlich ausfahrbare Seitenteile in der Transporteinheit enthalten. Die gegenüber den Transportabmessungen erzielbare Vergrößerung des mobilen Gebäudes ist gering. Ferner ermöglicht die Bauweise mit fachwerkartigen Strukturen keinen ungehinderten Zutritt zum Gebäude von allen Seiten, und sind Abdeckelemente für das Dach und alle Seitenwände erforderlich, die sich in der Transporteinheit nicht unterbringen lassen und es erfordern, Zubehör getrennt zu transportieren.

Aus der US-A-4 045 926 ist es bekannt, eine Dachkonstruktion mit massiven Dachplatten zusammengefaltet in einem Container zu transportieren und mit Hilfseinrichtungen auf die endgültige Größe aufzufalten. In Ortbauweise müssen eine Bodenplatte und die Seitenwände erstellt werden, um das Gebäude zu komplettieren. Das Gebäude ist dann nicht mehr mobil.

Weiterer Stand der Technik ist enthalten in US-A-4 912 892 und EP-A-0 221 795.

Der Erfindung liegt die Aufgabe zugrunde, ein mobiles Gebäude zu schaffen, das am Gebrauchsort rasch und bequem auf Gebrauchsabmessungen vergrößerbar ist, die durch die Transportabmessungen und die Mobilität nicht nennenswert beschränkt sind. Das zu schaffende mobile Gebäude soll ferner bei stationärem Einsatz außen wie innen attraktiv sein und mit einem vor Ort für ähnliche Zwecke aus Einzelteilen erstellten Gebäude konkurrenzfähig sein.

Die gestellte Aufgabe wird erfindungsgemäß mit den Merkmalen des Anspruchs 1 gelöst.

Das mobile Gebäude läßt sich mit bordeigenen Mitteln auf die ein Mehrfaches der Transportabmessungen betragenden Gebrauchsabmessungen vergrößern und bietet ein außerordentlich großes Nutzvolumen, eine sehr große Nutzfläche, ein attraktives Raumkonzept und die Zutrittsmöglichkeit praktisch von allen Seiten. Die Vergrößerung des Gebäudes und seine Verkleinerung zum Transport lassen sich rasch und bequem ohne nennenswerte zusätzliche Hilfsmittel durchführen, weil das Gebäude nicht zu zerlegen ist. Das Aussehen und die Raumgestaltungs-Attraktivität am Gebrauchsort sind unabhängig von der Transportabmessung und der transportgerechten Ausbildung. Es ist mit einfachen baulichen Mitteln und einer funktionellen Konzeption der Grundgedanke verwirklicht, das primär auf den Gebrauchszweck vor Ort abgestimmte Gebäude aus baulich bereits innerhalb der Transportabmessungen miteinander verknüpften Komponentengruppen so auszubilden, daß diese Verknüpfung beim Transport und im Gebrauch bestehen bleibt und trotzdem die Umwandlung leicht und rasch durchführbar ist. Das Gebäude läßt sich im Freien und in Gebäuden benutzen. Die Vergrößerung kann in Stufen oder stufenlos bis auf die maximalen Gebrauchsabmessungen erfolgen, d.h., das Gebäude muß nicht notwendigerweise in jedem Fall maximal vergrößert werden. Das Basisskelett ist beim Transport und im Gebrauch sehr tragfähig, trotz der eingegliederten Vergrößerungskomponenten und Antriebsvorrichtungen. Dennoch ist das Basisskelett schon auf den stationären Einsatz abgestimmt als transportgerechte Struktur, die sehr formstabil ist infolge der Portalrahmen und der durch Längsträger ausgesteiften Hilfsportalrahmen. Die Schwenkausleger ermöglichen eine erhebliche Breitenvergrößerung und führen zu einer stabilen Ausbildung der Dachkonstruktion des Gebäudes, wobei die Vergrößerung einfach durchzuführen ist. Da mit den Schwenkauslegern die Seitenwände der Transporteinheit hochbewegt werden, ist dann ungehinderter Zutritt zum Entnehmen der weiteren, in der Transporteinheit gespeicherten Komponenten gegeben.

Gemäß Anspruch 2 hat wenigstens eine komplette Seitenwand der Transporteinheit eine Mehrfachfunktion, da sie die Transporteinheit seitlich abschließt und aussteift, und im vergrößerten Gebäude stabiler Teil der Dachkonstruktion ist.

Gemäß Anspruch 3 ist das Gebäude bei der Umwandlung und im stationären Gebrauch unabhängig von Hilfsmitteln. Da im Regelfall die Transportvorschriften auf der Straße bereits eine relativ große Länge ermöglichen, und hauptsächlich die Breite und die Höhe beschränken, ist zweckmäßigerweise der Zusatzbehälter an einer Endseite des Basisskeletts angeordnet.

Gemäß Anspruch 4 ist die Versorgungs- und Steuerstation im Zusatzbehälter unterbringbar, der auch zum Aufbewahren weiterer Hilfsmittel bzw. als Notquartier nutzbar ist. Im Regelfall kann der Zusatzbehälter am Gebäude bleiben. Er läßt sich aber auch abnehmen und gesondert aufbewahren oder aufstellen. Die Transporteinheit kann Teil eines Fahrzeugs für den Transport sein. Alternativ ist es möglich, die Transporteinheit auf einem Tieflader zu transportieren.

Gemäß Anspruch 5 wird mit den Stützauslegern und den Bodenstützen ein großer stabiler Aufstandsbereich für das Gebäude geschaffen.

Gemäß Anspruch 6 sind die in der Transporteinheit geborgenen Bodenabdeckelemente auf große Breiten bringbar. Bei kleineren Gebäuden kann dies manuell erfolgen. Zweckmäßig erfolgt dies jedoch mittels der Antriebsvorrichtung, die am Gebrauchsort auch eine Tragfunktion für den Boden übernehmen kann. Ein hydraulischer Teleskopzylinder bietet den Vorteil einer kurzen Grundlänge (Transportbreite) im Vergleich zu großer Ausfahrlänge.

Gemäß Anspruch 7 wird mit den Hilfsportalrahmen der Dachbereich gegenüber dem Bodenrahmen gehoben. Die Hubvorrichtung kann ein in der Mitte des Portalrahmens am Bodenrahmen abgestützter Hydraulikzylinder sein, oder in den Holmen des Portalrahmens untergebrachte Hydraulikzylinder aufweisen. Gegebenenfalls läßt sich der mittig vorgesehene Zylinder vom Bodenrahmen lösen und nach oben ziehen, um den Portalrahmen freizugeben. In den Seitenholmen plazierte Zylinder bleiben optisch ohnedies stets im Hintergrund.

Gemäß Anspruch 8 sind die Kopplungsstellen gelenkig, um gefährliche oder schädliche Verspannungen im Basisskelett beim Transport (fahrbedingte Bewegungen) oder im Gebrauch (z.B. Windkräfte) zu vermeiden, und nur Zug- und Druckbelastungen zu übertragen. Die Gelenke führen beim Schwenken der Schwenkausleger und dienen später zur Kraftübertragung. Der Dachbereich im Basisskelett ist stabil und tragfähig, wobei Leichtbau- oder Gitterträger kleine Massen in obenliegenden Bereichen definieren und trotzdem große Kräfte aufnehmen.

Gemäß Anspruch 9 ist die hebbare Dachkonstruktion speziell im Mittelbereich des Gebäudes sehr stabil. Zweckmäßig lassen sich die Schwenkausleger mittels der sich tragenden Längsträger verschwenken, so daß die Längsträger mit den Schwenkauslegern und deren Randelementen sehr formstabile und in einem Zug bewegbare Vergrößerungskomponenten des Gebäudes bilden.

Gemäß Anspruch 10 wird die Dachkonstruktion zu einer oder zu beiden Seiten durch die hochschwenkbaren, ausgesteiften Schwenkausleger für eine große Nutzfläche des Gebäudes verbreitert. Dabei wird die Nutzfläche nicht durch die Höhe der Transporteinheit beschränkt, weil sich die Schwenkausleger nach Wunsch auch verlängern lassen.

Gemäß Anspruch 11 ist in der Transporteinheit eine den Gebrauchswert des vergrößerten Gebäudes erhöhende Galeriekonstruktion als Teil der bordeigenen Ausstattung eingegliedert, mit der sich die große Gebrauchshöhe im vergrößerten Gebäude besser nutzen läßt.

Gemäß Anspruch 12 sind Abdeckbahnen vorgesehen, die die Transporteinheit seitlich gegen die Witterung und Zugriff schützen, im vergrößerten Gebäude hingegen die Dachfläche nach einer oder beiden Seiten ergänzen. Die Abdeckbahnen können rolloartig ausgezogen oder aufgerollt werden, je nachdem, wie weit die Schwenkausleger ausgezogen sind. Bei nicht-ausziehbaren Schwenkauslegern könnten die Abdeckbahnen feste flächige Gebilde (Wandelemente der Transporteinheit) sein.

Gemäß Anspruch 13 werden Seitenwände des vergrößerten Gebäudes bei Bedarf durch bordeigene Seitenwandelemente hergestellt, die von den Randelementen abgestützt werden (Planen, Bahnen, Platten od. dgl.).

Gemäß Anspruch 14 ist eine individuelle Gestaltung der Seitenwände vor Ort möglich, wenn diese in bahnenförmige Abschnitte unterteilt oder wie Vorhänge angeordnet oder nach Art von Rollos handhabbar sind. Beispielsweise können tagsüber und bei gutem Wetter die Seitenwandelemente nur zum Teil oder überhaupt nicht, sondern bei schlechter Witterung oder während der Nacht angebracht sein.

Gemäß Anspruch 15 werden die Schwenkantriebe zum Hoch- und Abschwenken der Schwenkausleger benutzt, und gegebenenfalls auch zu deren Positionierung in der jeweils gewünschten Lage. Die Schwenkantriebe dienen gegebenenfalls auch zum Hochziehen der Seitenwandelemente und/oder zum Bewegen anderer Vergrößerungskomponenten, d.h. als ein bordeigenes, hochliegendes Hebezeug.

Die Schwenkantriebe gemäß Anspruch 16 sind baulich einfach und funktionssicher. Die Anhebe- und Absenkbewegung der Hilfsportalrahmen wird gleichzeitig zum Steuern der Bewegung der Schwenkausleger eingesetzt. Dies ist bei kleineren Transporteinheiten bzw. Gebäuden bei den dann geringeren Lastmomenten günstig und zeitsparend. Die Schwenkbewegung wird durch Umlenken und Verkürzen des Zugelementes erzeugt. Dies ist zweckmäßig bei einem Gebäude, das als Dachhälfte eine komplette Seitenwand der Transporteinheit verwendet.

Gemäß Anspruch 17 wird ein splatzsparender leistungsfähiger Schwenkantrieb vorgesehen, wie er für große Gebäude mit verlängerbaren Schwenkauslegern zweckmäßig ist. Der Hydraulikzylinder kann auch für weitere Hebefunktionen beim Vergrößern oder Verkleinern eingesetzt werden.

Gemäß Anspruch 18 wird bei maximaler Nutzung zulässiger Transportabmessungen für den Straßenverkehr die Nutzhöhe im vergrößerten Gebäude annähernd auf das Doppelte und die Nutzbreite annähernd auf das Vierfache gebracht. Dies führt zu einem stationären Gebäude mit großem Nutzraum und großer Bodenfläche, die zum Ausstellen großer Objekte und für viele Besucher zweckmäßig sind. Das Basisskelett tritt im vergrößerten Gebäude in den Hintergrund. Der nutzbare Raum ist frei und optisch attraktiv.

Gemäß Anspruch 19 wird ein kleineres Gebäude geschaffen, das auf der Transportgröße eines üblichen Containers aufbaut, dessen Höhe und Breite jedoch annähernd mindestens verdoppelbar sind.

Gemäß Anspruch 20 ist das Basisskelett sehr stabil. Es läßt sich kostengünstig herstellen und konzentriert einen Großteil der Masse des Gebäudes im Bodenbereich (hohe Kippstabilität).

Gemäß Anspruch 21 läßt sich zumindest ein Großteil der später beim Gebrauch erforderlichen Zusatzausstattungen einfach und zweckmäßig von vornherein vorsehen, wobei die Innenstruktur des Gebäudes bzw. der Transporteinheit zur Anbringung genutzt wird. Infolge des großen Nutzvolumens des vergrößerten Gebäudes läßt sich eine aufwendige und modernsten Anforderungen entsprechende Ausstattung in das Gebäude integrieren, z.B. auch für ein mobiles Fernsehstudio. Ein Teil der Ausstattung kann beim Transport zweckmäßigerweise auch im Zusatzbehälter verstaut sein.

Anhand der Zeichnung werden Ausführungsformen des Erfindungsgegenstandes erläutert. Es zeigen:
- Fig. 1 + 2: eine Seiten- und eine Rückansicht eines mobilen Gebäudes als Transporteinheit für den Straßentransport,
- Fig.3 + 4: Seitenansichten des vergrößerten stationären Gebäudes am Gebrauchsort,
- Fig. 5 + 7: Endansichten des vergrößerten Gebäudes,
- Fig. 6: eine schematische Draufsicht bzw. einen Horizontalschnitt des vergrößerten Gebäudes,
- Fig. 8: das mobile Gebäudes in einem Querschnitt in Vergrößerungsschritten,
- Fig. 9: ein konstruktives Detail aus dem mobilen Gebäude,
- Fig. 10 - 14: in schematischen Querschnitten Vergrößerungsschritte bei einer weiteren Ausführungsform eines mobilen Gebäudes,
- Fig. 15: eine Endansicht des vergrößerten Gebäudes der Fig. 10 bis 14,
- Fig. 16: eine Seitenansicht der Rückseite, und
- Fig. 17: eine Draufsicht auf das vergrößerte Gebäude.

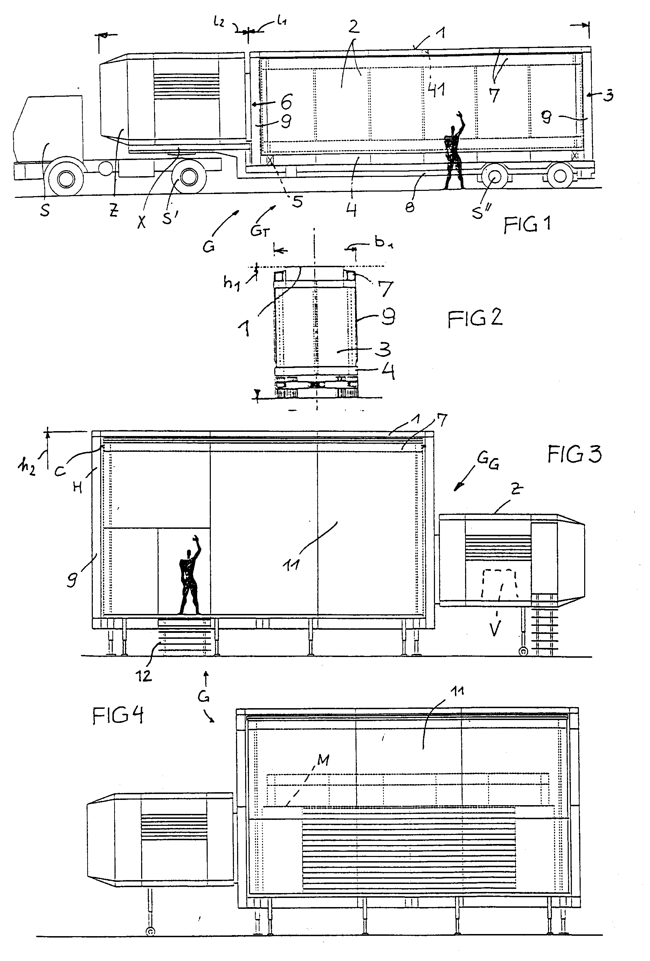

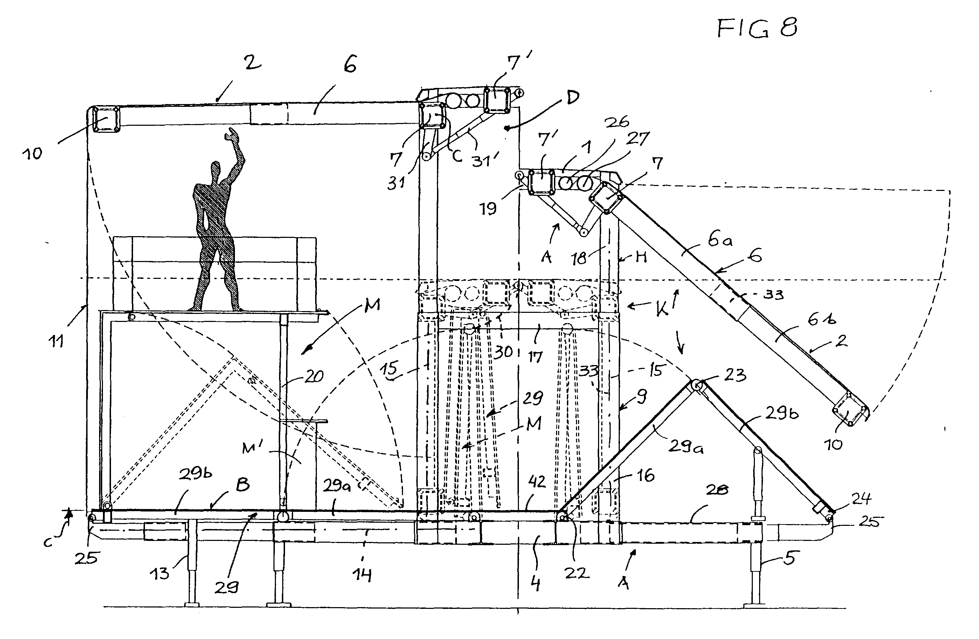

Ein mobiles Gebäude G ist umwandelbar zwischen einer Transporteinheit G_{T} (Fig. 1, 2) mit den Transportabmessungen l1 + l2, h1 + b1 und einer in Breite und Höhe erheblich vergrößerten stationären Gebrauchsgröße G_{G} (Fig. 3 bis 7) mit Abmessungen l1, b2 und h2, wobei die Höhe h2 annähernd doppelt so groß ist wie h1, während b2 z.B. mehr als ein Vierfaches von b1 sein kann. Die Länge l1 bleibt im gezeigten Fall unverändert. Das Gebäude G läßt sich mit bordeigenen Vergrößerungskomponenten K und Antriebsvorrichtungen A (Fig. 8) für die Vergrößerungskomponenten K zwischen den Transportabmessungen und den Gebrauchsabmessungen verändern.

In den Fig. 1 und 2 ist das Gebäude G Teil eines Lastzugs, z.B. eines Sattelschleppers S, mit einem Fahrwerk S'', wobei die Transporteinheit Anschlußeinrichtungen X und ein eigenes Fahrwerk S' aufweist. Alternativ läßt sich die komplette Transporteinheit auf einem Tieflader 8 transportieren. Die Transportabmessungen erlauben einen Straßen-Transport ohne Sondergenehmigung (l1 ca. 9,5m, b1 ca. 2,5m, h1 ca. 4m, l2 ca. 4,3 m). Das Gebäude G weist in Form der Transporteinheit eine durchgehende Dachkonstruktion 1 und seitliche Abdeckungen 2 (Bahnen, Platten oder Planen) auf. Am hinteren Ende 3 kann eine Abdeckklappe (nach Art einer absenkbaren Bordwand) angeordnet sein. An einem Bodenrahmen 4 sind Bodenstützen 5 und zwei endseitige Portalrahmen 9 fest angebracht. Ferner sind teleskopartig ausziehbare Schwenkausleger 6 zumindest vorne und hinten (gegebenenfalls auch dazwischen) vorgesehen und mit je einem Längsträger 7 der Dachkonstruktion 1 verbunden. An einem Ende des Gebäudes ist ein Zusatzbehälter Z, z.B. ein Standard-Container od. dgl., angebracht, vorzugsweise abnehmbar, der eine Versorgungs- und Steuerstation V (Fig. 3) aufnehmen kann. Der Bodenrahmen 4 bildet mit den fest angebrachten Portalrahmen 9, der Dachkonstruktion 1 mit ihren Längsträgern 7, 7' und einer Bodenabdeckung 42 ein selbsttragendes Basisskelett der Transporteinheit und später auch des vergrößerten Gebäudes. Das Basisskelett ist in der Transporteinheit durch die Abeckungen 2, 42 und 21 nach allen Seiten abgeschlossen. Zusätzliche Ausstattungsteile lassen sich innen verstauen. Auch der Zusatzbehälter Z bietet Stauraum.

Mit dem Schleppfahrzeug S wird die Transporteinheit an den Gebrauchsort (Freigelände oder ein Gebäude) gebracht und auf die Bodenstützen 5 abgesetzt. Das Schleppfahrzeug S kann sich entfernen. Dann wird das Gebäude G mit bordeigenen Mitteln auf die Gebrauchsabmessungen vergrößert, wie dies in Fig. 8 angedeutet ist.

Die mit dem Bodenrahmen 4 gemäß Fig. 8 verbundenen Portalrahmen 9 bestehen jeweils aus zwei vertikalen Holmen 16 und wenigstens einem Querholm 17. An jedem Portalrahmen 9 ist ein nach oben anhebbarer Hilfsportalrahmen H geführt, der seitliche Holme 18 und einen oberen Querholm 19 aufweist, der in die Dachkonstruktion 1 eingegliedert ist. Bordeigene Antriebsvorrichtungen A umfassen bei der in Fig. 1 bis 9 gezeigten Ausführungsform Hubvorrichtungen 15 in jedem Portalrahmen 9, wenigstens einen hydraulischen Teleskopzylinder 14, zweckmäßigerweise im Bodenrahmen 4 in der Längsmitte des Gebäudes und quer zur Längsrichtung an, sowie gegebenenfalls weitere, nicht im Detail hervorgehobene Antriebskomponenten. Die an den Längsträgern 7 befestigten Schwenkausleger 6 sind durch Randelemente 11 miteinander verbunden und jeweils teleskopartig ausziehbar. Sie dienen zum Tragen der Abdeckbahnen 2, die an den Randelementen 10 verankert sein können. Auf dem Bodenrahmen 4 und dem ausgefahrenen hydraulischen Teleskopzylinder 14 und gegebenenfalls eingesetzten Stützfüßen 13 ruht ein Boden B, der eine später erläuterte Bodenkonstruktion 29 bildet. Der Boden B befindet sich bei aufgestelltem Gebäude um ein Maß c über dem Erdboden, z.B. um rund 0,75 m. Falls ein Fahrwerk an der Transporteinheit vorgesehen ist, so kann dies entweder verbleiben oder am Gebrauchsort entfernt oder abgedeckt werden.

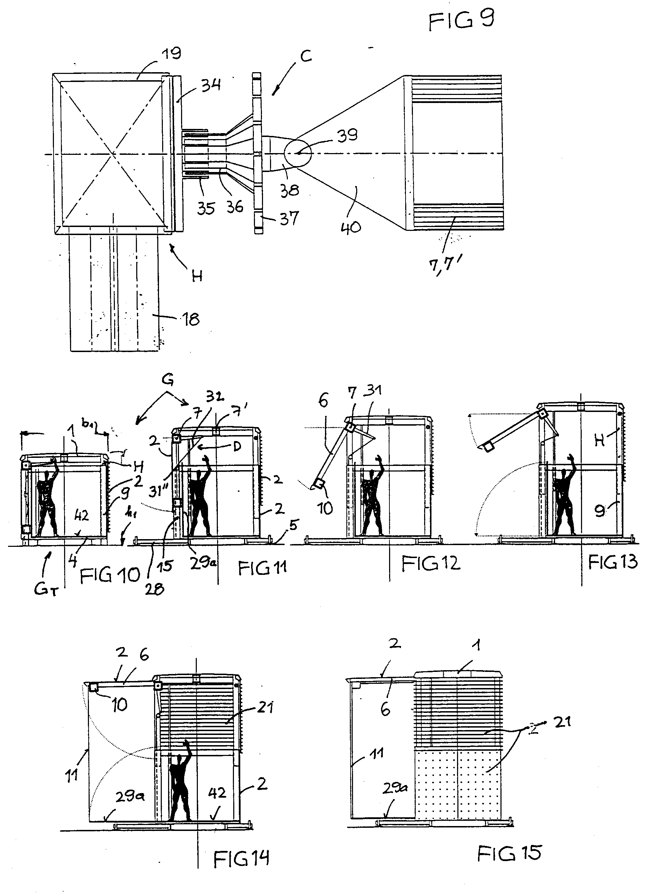

Die Hubvorrichtungen 15 (einfache Hydraulikzylinder, die am Bodenrahmen 4 verankert sind) dienen zum Anheben der Hilfsportalrahmen H. Zwischen den Randelementen 10 und den äußeren Rändern des Bodens B können zusätzlich Seitenwandabdeckungen 11 vorgesehen werden, zweckmäßigerweise als individuell nutzbare Bahnen aus blickdichtem, transparentem, schalldämmendem oder durchsichtigem Material. Die Seitenwandabdeckungen 11 können auch eingesetzte Plattenteile sein, oder nach Art von Rollos entweder aus dem Boden B nach oben oder aus den Randelementen 10 nach unten gezogen werden. Die Antriebsvorrichtungen können z.B. von der im Zusatzbehälter Z enthaltenen Versorgungs- und Steuerstation V versorgt und gesteuert werden. Nach dem Vergrößern des Gebäudes auf die Gebrauchsabmessungen kann der Zusatzbehälter Z gegebenenfalls entfernt und getrennt aufbewahrt oder umgesetzt werden. Denkbar ist es ferner, den Zusatzbehälter Z entsprechend den Fig. 10 bis 17 ebenfalls als mobiles vergrößerbares Gebäude auszubilden und gegebenenfalls für einen anderen Zweck einzusetzen. Wenigstens eine Treppe 12, die entweder im Zusatzbehälter Z oder in der Transporteinheit G_{T} mitgeführt wird, dient zum Überbrücken von Höhenunterschieden und zum Begehen des vergrößerten Gebäudes oder des Zusatzbehälters Z.

In Fig. 2 sind die Längsträger 7 angedeutet, die die Hilfsportalrahmen H in Längsrichtung koppeln. Die Kopplungsstellen zwischen den Längsträgern 7 und den Hilfsportalrahmen H sind als Gelenkstellen C ausgebildet, so daß die Längsträger 7 nur Druck- und Zugkräfte aufzunehmen haben, sich jedoch um ihre Längsachsen über ca. 90° drehen lassen. Die Längsträger 7, 7' sind zweckmäßigerweise als Leichtbau- oder Gitterträger ausgebildet.

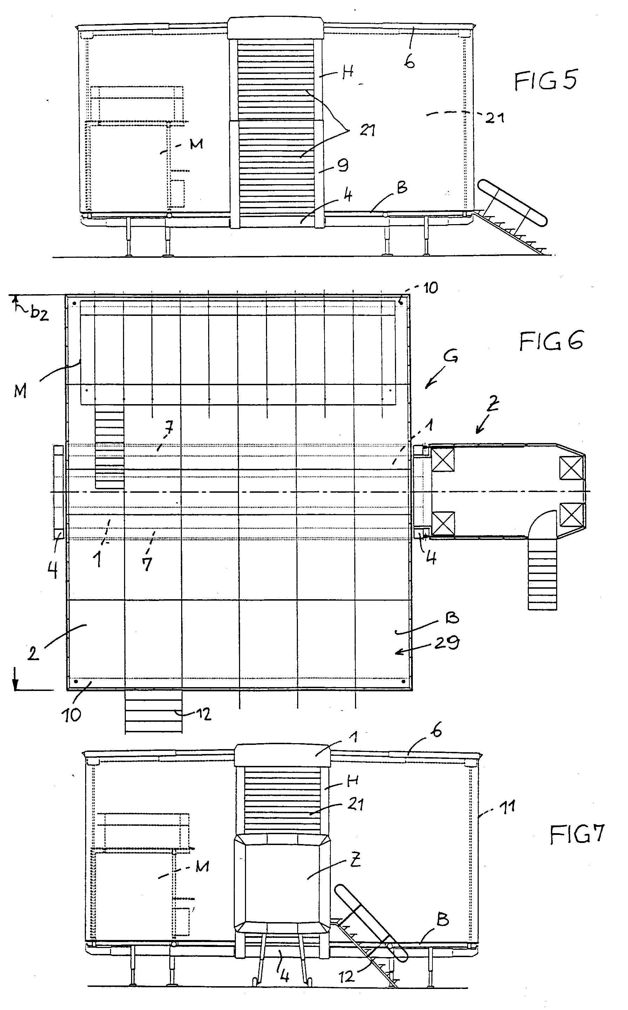

In Fig. 6 ist die annähernd quadratische, große Bodenfläche des Bodens B bzw. der Bodenkonstruktion 29 ersichtlich. Im Mittelbereich des Bodens B ist der Bodenrahmen 4 durch den bereits in der Transporteinheit vorhandenen Bodeneinsatz 42 abgedeckt, so daß sich mit Vergrößerungskomponenten K in Form ausfahrbarer oder auffaltbarer Bodenelemente 29a, 29b eine durchgehende, zweckmäßigerweise ebene Bodenfläche ergibt. Es ist durchaus möglich, die Bodenfläche durch integrierte Podeste, Schrägen, Stufen od. dgl. aufzulockern oder speziellen Gebrauchsanforderungen anzupassen. Falls erforderlich, können die Endseiten des vergrößerten Gebäudes durch bordeigene Abdeckelemente 21 abgedeckt sein, die bereits in der Transporteinheit vordere und hintere Begrenzungswände bilden. Falls nötig, können die Endseiten des Gebäudes über die volle Breite mit bordeigenen Abdeckungen ganz oder teilweise verschlossen werden.

In Fig. 8 sind die Schritte beim Vergrößern des Gebäudes von den Transportabmessungen auf die maximalen Gebrauchsabmessungen angedeutet.

Es wird zunächst die Transporteinheit auf seitlich ausziehbaren Stützauslegern 28 und den Bodenstützen 5 und Stützfüßen 13 abgestellt und nivelliert. Die Stützausleger 28 können von Hand oder mittels gesonderter Antriebsvorrichtungen mit den Teleskopzylindern 14 ausgeschoben werden. Zum Nivellieren sind zweckmäßigerweise die Bodenstützen 5 mit einzelnen Hydraulikzylindern verstellbar. Der Teleskopzylinder 14 dient hauptsächlich zum Verstellen des Bodens B und besitzt beidendige Greifhaken 25, die mit Endteilen 24 des Bodens B koppelbar sind.

Der Boden B besteht pro Gebäudeseite aus den zwei schwenkbar miteinander verbundenen Bodenelementen 29a, 29b, die am Bodeneinsatz 41 bei 22 schwenkbar angelenkt und miteinander in einer Schwenkachse 23 verbunden sind. Beim Transport können die Bodenelemente 29a, 29b mittels einer lösbaren Halterung 30 gesichert sein. Die Schwenkausleger 6 sind zunächst noch in den Seitenwänden der Transporteinheit in eine annähernd vertikalen Position (gestrichelt angedeutet). Die Abdeckbahnen 2 erstrecken sich nach unten zu den Randelementen 10. Jeder Schwenkausleger 6 besteht aus mindestens zwei teleskopierbaren Abschnitten 6a, 6b, die zum Einhalten der Transportabmessungen ineinandergeschoben, zum Vergrößern des Gebäudes jedoch auseinanderziehbar sind. In der Transportstellung bzw. in der jeweils ausgezogenen Gebrauchsstellung können die Abschnitte 6a, 6b durch mechanische Verriegelungen 33 gesichert sein. Die Seitenholme 18 des Hilfsportalrahmens H können in die Seitenholme 16 des Portalrahmens 9 eingeschoben sein. Ein Teil der nutzbaren Länge der Abdeckbahnen 2 ist auf Speicherrollen 26 aufgewickelt, die an den Querholmen 19 der Hilfsportalrahmen H gelagert sind. Für die Abdeckbahnen 2 können Umlenk- oder Antriebsrollen 27 vorgesehen sein, gegebenenfalls mit von der Versorgungs- und Steuerstation V betätigbaren Antrieben. Nahe der Mitte jedes Hilfsportalrahmens H sind zwei Längsträger 7' angeordnet, die von gleicher Bauweise sein können, wie die weiteren Längsträger 7, an denen die Schwenkausleger 6 festgelegt sind. Zumindest die Längsträger 7 sind um ihre Längsachsen um ca. 90° verdrehbar, und zwar zweckmäßigerweise in den Gelenkstellen C. Ähnliche Gelenkstellen können jedoch auch bei den Längsträgern 7' vorgesehen sein, um diese nur auf Zug und Druck zu belasten. Die Hubvorrichtung 15 erstreckt sich nach oben bis zum Querholm 17 und weist zweckmäßigerweise einen einfachen Hydraulikzylinder in der Mitte oder in jedem Seitenholm einen Zylinder auf.

Nachdem die Verriegelungen 33 entfernt, die Halterungen 30 gelöst, sowie die Enden 24 mit den Haken 25 gekoppelt sind, wird in Fig. 8 jede Hubvorrichtung betätigt und werden die Hilfsportalrahmen H angehoben, und zwar bis zu einem nicht-dargestellten Endanschlag, ehe jeder Hilfsportalrahmen H, z.B. mittels mechanischer Verriegelungen, arretiert wird. Zum Anheben der Schwenkausleger 6 ist ein Schwenkantrieb D im Hilfsportalrahmen H vorgesehen, der einen mit dem Längsträger 7 verbundenen Hebel 31 und einen am freien Hebelende angelenkten Hydraulikzylinder 31' aufweist, der in der Dachkonstruktion 1 abgestützt ist. Der Hebel 31 ist um annähernd 90° gegenüber dem Schwenkausleger 6 versetzt. Die Hydraulikzylinder 31' werden benutzt, um nach oder bei der Anhebebewegung des Hilfsportalrahmens H den Längsträger 7 zu verdrehen und die beiden Schwenkausleger 6 über ca. 90° nach außen oben zu verschwenken. Es ist jedoch auch denkbar, zwischen jedem Schwenkausleger 6 und dem Längsträger 7 ein Schwenkgelenk vorzusehen und den Hydraulikzylinder 31' direkt am Schwenkausleger 6 angreifen zu lassen. Bei der Anhebebewegung des Hilfsportalrahmens H wurde der Abschnitt 6b des Schwenkauslegers 6 aus dem Ausschnitt 6a herausgezogen, bis der Schwenkausleger 6 auf die gewünschte Länge gebracht worden ist. Die Abschnitte 6a, 6b können durch mechanische Verriegelungen 33 gesichert werden. Beim Auseinanderziehen der Schwenkausleger werden auch die Abdeckbahnen 2 von den Speicherrollen 26 abgewickelt, bis sich jeder Schwenkausleger 6 (Fig. 8) annähernd horizontal nach außen erstreckt. Er wird entweder über den Hebel 31 und den Hydraulikzylinder 31' in dieser Lage hydraulisch blockiert, oder über nicht-dargestellte mechanische Verriegelungen. Es können gegebenenfalls in den Gebäudeecken Stützstreben untergesetzt werden, die sich auf dem Erdboden oder auf dem Boden B abstützen.

Die plattenförmigen Bodenelemente 29a, 29b werden mittels des Teleskopzylinders 14 auseinandergeklappt bzw. ausgefahren, bis der ebene Boden B vorliegt, der sich zumindest zum Teil auf den Hydraulikzylindern 14 und zusätzlich durch die Stützfüße 13, 5 (an mehreren Punkten) abstützt.

Falls erforderlich, können Seitenwandbahnen 11 bereits frühzeitig eingehängt, hochgezogen und an den Außenrändern des Boden B verankert werden. Die Seitenwandbahnen 11 können bereits in der Transporteinheit am Randelement 10 befestigt und zunächst über die Bodenelemente 29a, 29b gelegt sein, so daß sie beim Hochschwenken der Schwenkausleger 6 selbsttätig in die erforderliche Lage gelangen. Alternativ könnten die Seitenwandbahnen auf Speicherrollen, z.B. am oder im Randelement 10 und/oder in den Rändern des Bodens B gespeichert sein und nach Bedarf wie Rollos abgespult werden. Bei der gezeigten Ausführungsform sind pro Gebäudeseite zwei Bodenelemente 29a, 29b vorgesehen. Der Boden B könnte jedoch auch aus mehreren, schmaleren und ziehharmonikaartig zusammengefalteten Bodenelementen bestehen.

Als Option kann ferner bereits in der Transporteinheit eine auffaltbare Galeriekonstruktion M enthalten sein, die gegebenenfalls mit den bordeigenen Antriebsvorrichtungen oder manuell aufgestellt wird, wenn der Boden ordnungsgemäß verlegt ist. Mitgeführte Stützstreben 20 und gegebenenfalls eine Theke M' können die bordeigene Einrichtung im Bereich der Galeriekonstruktion komplettieren.

An den einzelnen Komponenten des Gebäudes können baulich fest eingegliederte Befestigungs- oder Anschlußeinrichtungen für Zusatzausstattungen vorgesehen sein, z.B., um Beleuchtungs-, Belüftungs-, Heizungs-, Klimatisierungs-, Audio- und Videoausstattungsskomponenten oder Hinweis- und Informationstafeln im Inneren des vergrößerten Gebäudes bequem anbringen zu können. Im übrigen könnten über die Länge der Dachkonstruktion 1 verteilt mehrere Querverstrebungen 41 (Fig. 1) vorgesehen sein.

Fig. 9 verdeutlicht eine Gelenkstelle C zum Koppeln eines Längsträgers 7, 7' mit dem Hilfsportalrahmen H. Am oberen Querholm 19 des Hilfsportalrahmens H (oder an den Seitenholmen 18) ist eine Platte 34 mit einem Drehlagersockel 35 befestigt, in dem ein Achsstummel 36 eines Zwischenteils 37 um eine in etwa horizontale Achse drehbar ist, die in etwa mit der Längsachse des Längsträgers 7, 7' übereinstimmt. An dem Zwischenteil 37 ist ein Lagerbock 38 vorgesehen, in welchem ein Lagerbock 40 am Ende des Längsträgers 7, 7' um eine annähernd horizontale Achse 39 schwenkbar ist. Die Achse 39 kreuzt die andere, horizontale Achse des Achsstummels 36, so daß eine Art Kardangelenk entsteht. In der Gelenkstelle C werden somit hauptsächlich nur Zug- und Druckbelastungen zwischen dem Hilfsportalrahmen H und dem Längsträger 7, 7' übertragen.

Um das vergrößerte Gebäude wieder auf die Transportabmessungen gemäß den Fig. 1 und 2 zu verkleinern und die Transporteinheit zu bilden, werden die vorerwähnten Schritte in umgekehrter Reihenfolge durchgeführt.

Bei der in den Fig. 1 bis 9 gezeigten Ausführungsform sind Transportabmessungen mit etwa 4,0 m Höhe h1 und effektiver Höhe zwischen dem Bodenrahmen 4 und der Dachkonstruktion 1 von ca. 3,25m, eine Breite b1 von 2,5m und eine Länge l1 von ca. 9,5m vorgesehen, wobei der angebaute Zusatzbehälter Z eine zusätzliche Länge l2 von ca. 4,0 m hat. Die maximalen Gebrauchsabmessungen, auf die sich das mobile Gebäude vergrößern läßt, sind durch eine Breite b2 von ca. 10,5m und eine Höhe h2 von ca. 5,8 m charakterisiert, wobei die Länge l1 bei 9,5 m bleibt. Auf diese Weise läßt sich das Volumen annähernd um den Faktor 7,5 vergrößern. Die Bodenfläche wird um einen Faktor von annähernd 4,2 vergrößert.

Die Fig. 2 und 3 zeigen das vergrößerte Gebäude in Seitenansichten von beiden Seiten, während die Fig. 5 und 7 Ansichten der beiden Endseiten sind.

Ein einfacheres mobiles Gebäude G gemäß den Fig. 10 bis 17 ist in den Transportabmessungen l1, b1 und h1 und den Gebrauchsabmessungen b2, h2 und l1 kleiner als das mobile Gebäude der Fig. 1 bis 9 und für andere Einsatzzwecke verwendbar. Es hat als Transporteinheit die Abmessungen üblicher Container, die bequem zu transportieren sind, und ermöglicht es, die Gebrauchsabmessungen auf die annähernd doppelte Höhe und doppelte Breite zu vergrößern und ein an zumindest einer Längsseite unbehindert begehbares Gebäude zu bilden, bei dem die Dach- und Bodenkonstruktion zum Teil aus der Seitenwand der Transporteinheit bildbar ist.

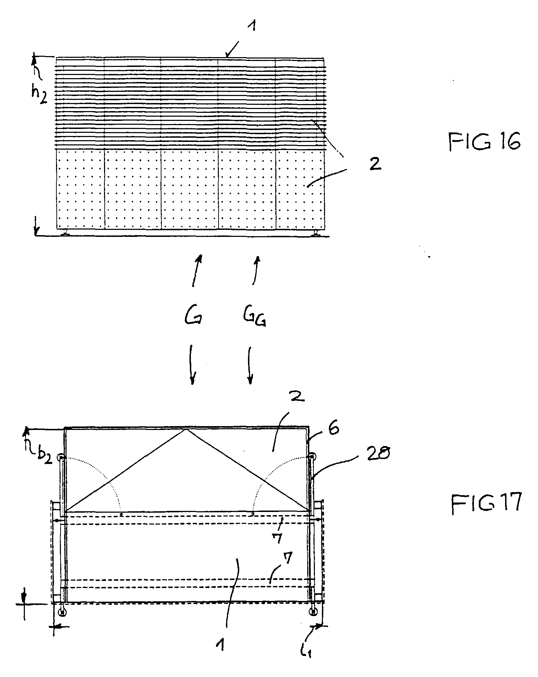

Der Bodenrahmen 4 bildet mit den Portalrahmen 9 und einer Bodenabdeckung 42 das Basisskelett für die Transporteinheit und das vergrößerte Gebäude. An den Portalrahmen 9 sind Hilfsportalrahmen H anhebbar angeordnet, die in die Dachkonstruktion 1 mit Längsträgern 7, 7' eingegliedert sind, wobei zumindest einer der Längsträger 7 um seine Längsachse drehbar und mit den Schwenkauslegern 6 verbunden ist. Eine Schwenkvorrichtung D dient zum Ausschwenken der die Dachabdeckung 2 tragenden Schwenkausleger 6, die durch das Randelement 10 miteinander verbunden sind. Der Schwenkantrieb D ist funktionell verknüpft mit der wenigstens einen Hubvorrichtung 15 für den Hilfsportalrahmen H, in dem eine von der Hubvorrichtung 15 nach oben verfahrbare Umlenkrolle 31'' an einem als Seil- oder Kettenabschnitt ausgebildeten Zugelement 32 angreift, das entweder im Portalrahmen 9 oder im Bodenrahmen 4 verankert ist und sich zum freien Ende des Hebels 31 am Längsträger 7 erstreckt. Beim Anheben des Hilfsportalrahmens H wird auch die Umlenkrolle 31'' nach oben verfahren, bis schließlich die Schwenkausleger 6 annähernd waagrecht von der Dachkonstruktion 1 abstehen. Da die Schwenkausleger 6 bei dieser Ausführungsform nicht notwendigerweise teleskopierbar sein müssen, kann die Abdeckbahn 2 auch durch ein Plattenelement gebildet werden. Die seitlichen Abdeckungen 2 an einer Seite des Gebäudes sind, falls diese Gebäudeseite nicht geöffnet werden soll, übereinanderschiebbare Plattenelemente, von denen eines mit der Bodenabdeckung 42 verbunden sein kann. Ferner ist an der Bodenabdeckung 42 ein Bodenabdeckelement 29a verschwenkbar angelenkt, das nach dem Anheben des Hilfsportalrahmens H (Fig. 14) ausschwenkbar und auf die ausschwenkbaren Stützausleger 28 auflegbar und mittels der Bodenstützen 5 nivellierbar ist. Falls erwünscht, kann zwischen dem Randelement 10 und dem freien Rand des Bodenabdeckelementes 29a eine seitliche Abdeckung 11 eingehängt werden. Die Endseiten des Gebäudes können zumindest in der Transportbreite durch Abdeckelemente 21 verschlossen sein, die zweckmäßigerweise relativ zueinander verschiebbar am Portalrahmen 9 bzw. am Hilfsportalrahmen H angebracht sind. Die mit dem Hilfsportalrahmen H bewegbare Abdeckung 21 könnte mit der Dachkonstruktion 1 verbunden sein. Diese Abdeckungen 21 könnten auch nach Art von Rolläden oder Lamellenjalousien oder Rollos ausgebildet und damit hochziehbar sein, um auch von den Endseiten das Gebäude öffnen zu können.

Die den Schwenkauslegern 6 abgewandte Hinterseite des vergrößerten Gebäudes könnte in voller Höhe durch die Abdeckungen 2 (in Form von Plattenelementen) verschlossen sein. Es ist aber auch denkbar, hier Jalousien oder Rollos od. dgl. anzuordnen. Ferner könnte auch an der Hinterseite des Gebäudes eine zu öffnende Konstruktion mit Schwenkauslegern 6 (Fig. 12) vorgesehen werden, und könnte auch das hintere, untere Abdeckelement 2 als Bodenabdeckelement schwenkbar nach außen geklappt werden. Dann ließe sich die Breite b auf annähernd den dreifachen Wert der Transportbreite b1 vergrößern. Das mobile Gebäude gemäß den Fig. 10 bis 17 kann auf einem herkömmlichen Lastkraftwagen transportiert und mittels des Mobilkrans des Transportfahrzeuges oder mit einem anderen Hebezeugs abgesetzt und dann vergrößert werden. Die Dachkonstruktion 1 ist mit einem mittigen Längsträger 7' ausgestattet. Es könnten jedoch mehrere nebeneinanderliegende Längsträger 7' vorgesehen sein. Denkbar ist es ferner, die Transporteinheit aus zwei teleskopartig ineinandergeschobenen Wannen zu bilden, die über die Portalrahmen 9 und die Hilfsportalrahmen H relativ zueinander anhebbar verbunden und aneinander geführt sind, wobei beide Wannen zweckmäßigerweise Seitenwände aufweisen, die sich über annähernd 90° nach außen schwenken lassen, so daß letztendlich ein vergrößertes Gebäude herstellbar ist, das mit den nach außen geklappten Seitenwänden der Wannen im Grundzug nach allen Seiten offen ist und einen sehr großen nutzbaren und überdachten sowie mit einem Boden versehenen Raum bietet, in welchem nur die Portalrahmen und Hilfsportalrahmen als verbindende Elemente sichtbar sind. Die Seitenwände der Wannen könnten entweder Plattenelemente oder mit Planen oder Bahnen bestückt sein. Im erstgenannten Fall ergibt sich eine sehr stabile Einheit, während im zweiten Fall die Transporteinheit und das fertige Gebäude sehr grazil und leicht ist.

Die in den vorhergehenden Figuren gezeigten, mobilen Gebäude repräsentieren zwei sinnvolle Extreme. Es liegt auf der Hand, daß sämtliche Zwischengrößen mit mehr oder weniger aufwendigen Ausstattungen möglich sind, wobei mit zunehmender Größe und stabilerer Ausbildung des mobilen Gebäudes ein höherer Aufwand für die Vergrößerungskomponenten und deren Bewegungsantrieben zweckmäßig ist, um einerseits beim stationären Gebrauch die Sicherheitsvorschriften zu erfüllen und andererseits eine bequeme Handhabung beim Vergrößern und Verkleinern zu ermöglichen.

Bei der Ausführungsform des mobilen Gebäudes gemäß den Fig. 10 bis 17 ist der zusätzliche Vorteil eines großen, unverbauten Stauraums in der Transporteinheit gegeben.

Unter anderem aus diesem Grund könnte das mobile Gebäude der Fig. 10 bis 17 bei dem mobilen Gebäude der Fig. 1 bis 9 als der dort zweckmäßig vorgesehene Zusatzbehälter Z eingesetzt werden.

## Patentansprüche

1. Mobiles Gebäude (G), insbesondere für Ausstellungs-, Präsentations- oder Informationszwecke, das für einen Straßentransport zulässige Transportabmessungen (l1, l2, h1, b1) besitzt und am Gebrauchsort wenigstens in Breite und Höhe auf ein Mehrfaches der Transportabmessungen betragende Gebrauchsabmessungen (h2, b2) vergrößerbar und stationär einsetzbar ist, wobei das Gebäude (G) als Transporteinheit (G_{T}) bordeigene, funktionell integrierte Vergrößerungskomponenten (K) und Antriebsvorrichtungen (A, D) für die Vergrößerungskomponenten aufweist, **dadurch gekennzeichnet,** daß das Gebäude (G) ein selbsttragendes Basisskelett aus einem Bodenrahmen (4) und daran endseitig, hochstehenden Portalrahmen (9) aufweist, an denen mit wenigstens einer Hubvorrichtung (15) teleskopartig anhebbare, in Längsrichtung des Gebäudes durch wenigstens einen Längsträger (7, 7') miteinander gekoppelte Hilfsportalrahmen (H) geführt sind, und daß an wenigstens einem Längsträger (7) zu diesem in etwa senkrechte Schwenkausleger (6) angeordnet sind, die um eine gemeinsame Längsachse des Gebäudes (G) hochschwenkbar sind.

2. Mobiles Gebäude nach Anspruch 1, **dadurch gekennzeichnet,** daß wenigstens eine Seitenwand (2) der Transporteinheit (G_{T}) bildende, die Schwenkausleger (6) aufweisende Vergrößerungskomponenten (K) zusammen mit einer schmalen Dachkonstruktion (1) an den Hilfsportalrahmen (H) eine aufklappbare Dachstruktur (D) des auf die Gebrauchsabmessungen vergrößerten Gebäudes (G) bilden.

3. Mobiles Gebäude nach Anspruch 1, **dadurch gekennzeichnet,** daß das Gebäude (G) eine bordeigene Versorgungs- und Steuerstation (V), insbesondere für die Antriebsvorrichtungen (A), aufweist, und daß die Versorgungs- und Steuerstation (V) in einem an das Gebäude (G) angegliederten Zusatzbehälter (Z), insbesondere einem in Längsrichtung angegliederten, vorzugsweise abnehmbaren, Container, untergebracht ist.

4. Mobiles Gebäude nach wenigstens einem der vorhergehenden Ansprüche, **dadurch gekennzeichnet,** daß die Transporteinheit (G_{T}), vorzugsweise mit dem Zusatzbehälter (Z), mit einem Fahrwerk und/oder Anschlußeinrichtungen (X) für ein Schleppfahrzeug (S) ausgestattet ist.

5. Mobiles Gebäude nach Anspruch 1, **dadurch gekennzeichnet,** daß am Bodenrahmen (4) seitlich über dessen Kontur ausfahrbare Stützausleger (28) mit Bodenstützen (5) angeordnet sind.

6. Mobiles Gebäude nach Anspruch 1, **dadurch gekennzeichnet,** daß am Grundrahmen (4) seitlich aufklappbare oder ausfahrbare Bodenabdeckelemente (29a, 29b) und wenigstens ein in Querrichtung orientierte Antriebsvorrichtung (14) für die Bodenabdeckelemente, vorzugsweise eine hydraulische Teleskopzylinderanordnung, angeordnet sind.

7. Mobiles Gebäude nach Anspruch 1, **dadurch gekennzeichnet,** daß der Portalrahmen (9) Seitenholme (16) und wenigstens einen Querholm (17) aufweist, daß die zwischen den Seitenholmen (16) vorgesehene Hubvorrichtung (15), vorzugsweise ein Hydraulikzylinder, mit dem Bodenrahmen (4), vorzugsweise lösbar (bei 20), verbunden ist, oder daß die Hubvorrichtung (15) in den Seitenholmen (16) jeweils einen Hydraulikzylinder aufweist.

8. Mobiles Gebäude nach Anspruch 1, **dadurch gekennzeichnet,** daß die Längsträger (7, 7') Gitter- oder Leichtbauträger sind, und daß die Kopplungsstellen zwischen den Längsträgern und den Hilfsportalrahmen (H) als druck- und zugsteife Gelenkstellen (C) mit zur Gebäudelängsachse parallelen Gelenkachsen ausgebildet sind, vorzugsweise Kardangelenkstellen.

9. Mobiles Gebäude nach Anspruch 1, **dadurch gekennzeichnet,** daß die jeweils durch ein Randelement (10) verbundenen Schwenkausleger (6) an die Ecken der Hilfsportalrahmen (H) koppelnden Längsträgern (7) fest angebracht und zusammen mit diesen um deren Längsachsen aus einer in etwa vertikalen Transportstellung verdrehbar sind, vorzugsweise um etwa 90° oder mehr.

10. Mobiles Gebäude nach Anspruch 1 oder 9, **dadurch gekennzeichnet,** daß jeder Schwenkausleger (6) auf annähernd die doppelte Transportabmessung (h1) verlängerbar und, vorzugsweise, ein Teleskop-Schwenkausleger, ist.

11. Mobiles Gebäude nach wenigstens einem der vorhergehenden Ansprüche, **dadurch gekennzeichnet,** daß am Bodenrahmen (4) oberhalb der Bodenabdeckelemente (29a, 29b) wenigstens eine mittels der bordeigenen Antriebsvorrichtung, vorzugsweise der Hubvorrichtung (15) für die Hilfsportalrahmen (H), aufstellbare Galeriekonstruktion (M) angeordnet ist.

12. Mobiles Gebäude nach wenigstens einem der vorhergehenden Ansprüche, **dadurch gekennzeichnet,** daß unterhalb der Dachkonstruktion (1) wenigstens eine Speicherrolle (26) und eine Antriebs- oder Umlenkrolle (27) für eine seitlich ausziehbare, flächige Abdeckbahn (2) gelagert sind, die, vorzugsweise, mit dem Randelement (10) verbunden ist.

13. Mobiles Gebäude nach wenigstens einem der vorhergehenden Ansprüche, **dadurch gekennzeichnet,** daß im vergrößerten Gebäude (G) zwischen den Randelementen (10) und den Außenrändern der ausgeklappten oder ausgefahrenen Bodenabdeckelemente (29a, 29b) flächige, bordeigene Seitenwandelemente (11) in blickdichter, transparenter, schallhemmender oder durchsichtiger Ausbildung vorgesehen sind, deren jedes, vorzugsweise, in mehrere bahnenförmige Abschnitte unterteilt ist.

14. Mobiles Gebäude nach Anspruch 13, **dadurch gekennzeichnet,** daß in den Außenrändern der Bodenabdeckelemente (29a, 29b) und/oder in den Randelementen (10) drehbare Speicherrollen für Seitenwandelemente (11) bzw. deren Abschnitte vorgesehen sind.

15. Mobiles Gebäude nach Anspruch 1, **dadurch gekennzeichnet,** daß an den Hilfsportalrahmen (H) bordeigene Schwenkantriebe (D) für die Schwenkausleger (6) vorgesehen sind.

16. Mobiles Gebäude nach Anspruch 15, **dadurch gekennzeichnet,** daß jeder Schwenkantrieb (D) einen mit dem weiteren Längsträger (7) verbundenen, gegenüber dem Schwenkausleger (6) winkelversetzten Hebel (31) und ein das freie Hebelende mit dem Portalrahmen (9) oder dem Bodenrahmen (4) verbindendes Zugelement (32) aufweist, das durch die Hubvorrichtung (15) des Hilfsportalrahmens (H) betätigbar ist, und daß das Zugelement (32) ein im Portalrahmen (9) oder am Bodenrahmen (4) verankerter Seil- oder Kettenabschnitt ist, und daß die in zumindest einem Seitenholm (16) des Portalrahmens (9) angeordnete Hubvorrichtung (15') ein mitverfahrbares Umlenkglied trägt, das am Zugelement (32) angreift.

17. Mobiles Gebäude nach Anspruch 15, **dadurch gekennzeichnet**, daß ein mit dem Schwenkausleger (6) oder dem weiteren Längsträger (7) verbundener Hebel (31) an einem in der Dachkonstruktion (1) abgestützten Hydraulikzylinder angelenkt ist.

18. Mobiles Gebäude nach Anspruch 1, **dadurch gekennzeichnet**, daß das Gebäude (G) von seinen Transportabmessungen, ausgenommen dem Zusatzbehälter (Z), von etwa 3,25 m Höhe, 2,50 m Breite und 9,5 m Länge auf maximale Gebrauchsabmessungen (G_{G}) von über 5 m Höhe, über 10 m Breite vergrößerbar ist.

19. Mobiles Gebäude nach Anspruch 1, **dadurch gekennzeichnet**, daß das Gebäude (G) von seinen Transportabmessungen von etwa 2,5 m Höhe, etwa 2,5 m Breite und etwa 6,7 m Länge auf maximale Gebrauchsabmessungen (G_{G}) von über 4,3 m Höhe und über 4,2 m Breite vergrößerbar ist.

20. Mobiles Gebäude nach Anspruch 1, **dadurch gekennzeichnet**, daß zumindest der Bodenrahmen (4) und die Portalrahmen (9) aus verschweißten, vernieteten oder verschraubten Stahlprofilträgern bestehen.

21. Mobiles Gebäude nach wenigstens einem der vorhergehenden Ansprüche, **dadurch gekennzeichnet**, daß in der Transporteinheit am Basisskelett und/oder an den Hilfsportalrahmen und/oder an der Dachkonstruktion und/oder an den Längsträgern bzw. den Portalrahmen (9) Installations- und Anschlußeinrichtungen für Beleuchtungs-, Audio- und Video-Ausstattungen, Heizungs- oder Klimatisierungs-Komponenten und dgl. vorgesehen sind.
